# EUROPEAN PATENT APPLICATION

(11) **EP 1 213 201 A2**
(43) Date of publication of application: **12.06.2002**
(21) Application number: 01301759.5
(22) Date of filing: 27.02.2001
(51) Int. Cl.: B61D 17/04

(54) **Car body of a railway car**

(30) Priority: 11.12.2000 JP 2000381641
(71) Applicant: Hitachi, Ltd., Chiyoda-ku, Tokyo 101-8010 (JP)
(72) Inventor: Yono, Masaki, c/o Hitachi, Ltd, I.P.G., Chiyoda-ku, Tokyo 100-8220 (JP); Takeichi, Tetsuya, c/o Hitachi, Ltd, I.P.G., Chiyoda-ku, Tokyo 100-8220 (JP); Okada, Norihisa, c/o Hitachi, Ltd, I.P.G., Chiyoda-ku, Tokyo 100-8220 (JP)
(74) Representative: Paget, Hugh Charles Edward

(57) **Abstract**

A railway car body is produced with high accuracy in an easy manner. An underframe 10 is formed by joining together a plurality of hollow members 50,60 that extend in the longitudinal direction of the car body. The hollow member 60 constituting the end portion of the underframe 10 in the width direction is provided with a hollow portion 65 corresponding to a part of a side sill. The hollow member 90 at the lower end of a side structure 20 is provided with a hollow portion 95 corresponding to a part of a side sill. An overlap between a projecting segment 101 of the side sill 95 and the upper surface of the side sill 65 is welded from above. An overlap between a projecting segment 103 of the lower end and a projecting segment 73 is welded from below. The size of the overlap is selected in accordance with the shrinkage of the underframe 10 when welding the bolsters thereto.

## Description

### FIELD OF THE INVENTION

The present invention relates to bonding of a side structure and an underframe in a car body of railway car.

### DESCRIPTION OF THE RELATED ART

As is disclosed in Japanese Patent Laid-Open No. H5-139298, a car body of a railway car is comprised of an underframe constituting the floor, side structures constituting the side surfaces, a roof structure constituting the roof, and end structures constituting the end portions in the longitudinal direction of the car body. The underframe is comprised of two side sills arranged along the longitudinal direction of the car body, and cross beams arranged between the two side sills in perpendicular to the side sills. Also, the lower surface of the underframe is provided with bolsters, which are welded in the width direction of the car body, for mounting to a bogie. The bolsters are also welded to the side sills. The bolsters are provided at two locations along the longitudinal direction of the car body. The underframe and the side structures are united by welding. The side structures are placed on top of the underframe, and are welded from the internal side and the external side. The externally welded region is visible from the external side.

### SUMMARY OF THE INVENTION

The thick bolsters are welded to the lower surface of the underframe. Therefore, the width size of the underframe tends to differ at different locations in the longitudinal direction. Especially, the width size greatly shrinks at the region with the bolster. For example, when the bolster is welded to the underframe, the width size of the underframe shrinks for approximately 10 mm. Therefore, the cross beam with its length elongated in prospect of this shrinkage is welded to the side sill, and then the bolster is welded thereto to obtain a predetermined size. Therefore, the welding operation of the underframe is troublesome. Moreover, the shrinkage differ from the temperature during welding operation and the like, making it difficult to manufacture an underframe with good accuracy.

Furthermore, when the width of the underframe differs, there exist gaps in the welding region with the side structures. Therefore, the welding in this region becomes difficult. As a result, it is impossible to manufacture a car body with high accuracy. Still further, this welding region is visible, especially in the case where the car body is not coated, so that the appearance is deteriorated.

The object of the present invention is to enable manufacturing of a high-accuracy car body with ease.

The above-mentioned object could be achieved by a car body, wherein:
an upper and lower portion of a first side sill at an end portion in the width direction of an underframe and an upper and lower portions of a second side sill at an lower end portion of a side structure are respectively overlapped in the horizontal direction;
the overlap between the upper portion of the first side sill and the upper portion of the second side sill is bonded from above; and
the overlap between the lower portion of the first side sill and the lower portion of the second side sill is bonded from below.

### BRIEF DESCRIPTION OF THE DRAWINGS

FIG. 1 is a longitudinal cross-sectional view of the feature according to an embodiment of the present invention;
FIG. 2 is a view showing the assembling operation of the underframe and the side structures according to the present invention; and
FIG. 3 is a perspective view of the car body seen from below.

### DETAILED DESCRIPTION OF PREFERRED EMBODIMENTS

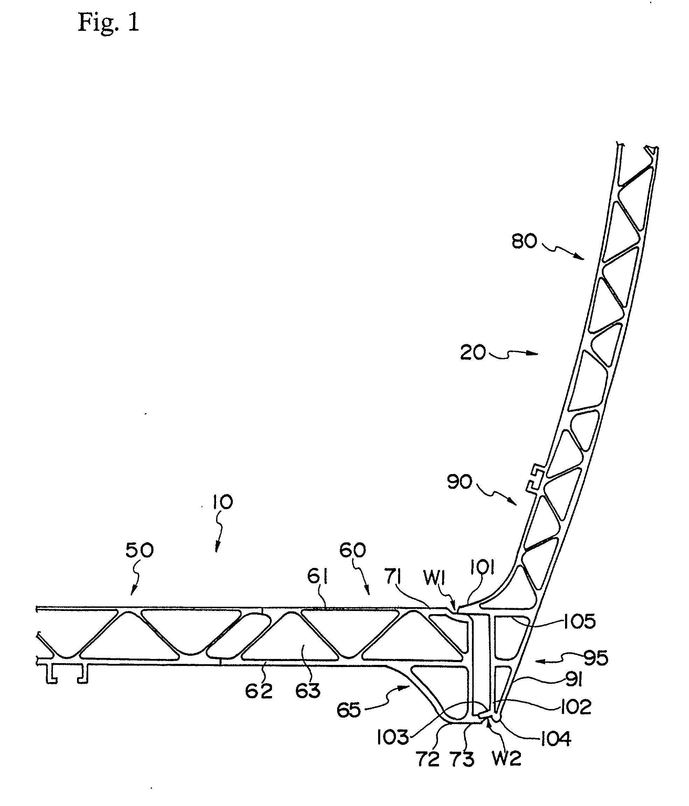

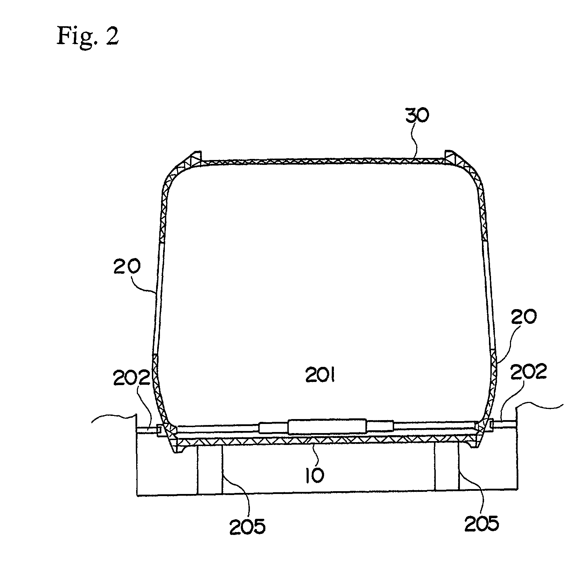

A preferred embodiment of the present invention will now be explained referring to FIG. 1 through FIG. 3. A car body is comprised of an underframe 10, a pair of side structures 20, a roof structure 30, and end structures 40.

The underframe 10 is formed by welding together a plurality of hollow metal members 50,60 here called hollow shaped materials. Typically these hollow shaped materials are extruded members of aluminium alloy, the extrusion direction corresponding to the longitudinal direction of the railway car body. The hollow shaped materials extend in the longitudinal direction of the car body. A bolster 15 is welded to the lower surface of the underframe along the width direction thereof. The bolster 15 is made of thick, plural plates. The bolster 15 is also welded to the side sills at the end portions in the width direction of the underframe. Each underframe 10 includes two bolsters 15, which are provided on a bogie. The hollow-shaped materials 50, 60 are bonded together by welding or friction stir welding.

The hollow-shaped material 60 constituting the end portion of the underframe 10 is comprised of two face plates 61, 62, and connecting plates 63 connecting the two in a truss shape. Also, to the end portion side of the hollow-shaped material 60 (end portion side of the underframe 10 in the width direction), there is provided integrally a rigid hollow portion 65 corresponding to a so-called side sill. The side sill 65 is extruded together with the hollow-shaped material 60. The region of the side sill 65 projects downward from the lower face plate 62 of the hollow-shaped material 60. Also, in order to constitute a side sill 65, the hollow-shaped material of the region is thicker than the other hollow-shaped materials (larger in the longitudinal size), and is thicker in plate thickness. Also, the same is larger in width size.

The bolster 15 is welded to the lower surfaces of the hollow-shaped materials 50, 60. The end portion of the bolster 15 is welded to the side surface of the side sill 65 which projects downwardly.

The hollow-shaped material 50 is substantially the same as the hollow-shaped material 60 with the side sill 65 taken away.

The side structure 20 is comprised of a plurality of hollow-shaped materials 80, 90 arranged along the longitudinal direction of the car body. The hollow-shaped materials 80, 90 are typically extruded members of aluminium alloy joined by friction stir welding to each other and have generally the same structure as the hollow-shaped materials 50, 60, but differ in the size and the plate thickness. The lower end of the hollow-shaped material 90 at the lower end of the side structure has an integral hollow-shaped portion 95 corresponding to a so-called side sill. The side sill 95 is welded to the side sill 65, and constitutes a so-called one side sill. The plate thickness at the region of the side sill 95 is thickened.

A projecting segment 101 is projected towards the horizontal direction from the side surface of the side sill 95 facing the underframe 65. The projecting segment 101 overlaps the upper surface of the upper face plate 71 of the side sill 65. This overlap is fillet welded w1 from above. The upper surface of the face plate 71 at the overlap is concaved. The projecting segment 101 is formed by projecting a horizontal connecting plate 105 of the hollow-shaped material 90 in the horizontal direction.

The side sill 65 facing the side sill 95 includes a projecting segment 73 projecting in the horizontal direction from a lower face plate 72. The face plates 71, 72 are face plates in the horizontal direction which constitute the hollow-shaped material of the side sill 65. The projecting segment 73 overlaps the projecting segment 103 which is formed by projecting a lower plate (a connecting plate constituting the hollow-shaped material) 102 of the side sill 95 in the horizontal direction. The overlap is fillet welded w2 from below. The projecting segment 103 overlaps the projecting segment 73 from above.

A face plate 91 constituting the side surface of the side sill 95 is elongated downwardly to form a projecting segment 104. The projecting segment 104 is positioned at the external side of the car than the welding region, so that it makes the visual contact of the welding region from side direction (for example, from a platform) difficult. Therefore, there is no need to flatten the welding region, and the operation could be simplified.

The size of the overlap between the face plate 71 and the projecting segment 101, and the size of the overlap between the projecting segment 73 and the projecting segment 103 are larger than the shrinkage of the case where a plurality of hollow-shaped materials 50, 60 are welded together, and the maximum shrinkage of the case where the bolster 15 is welded thereto. Therefore, even if the underframe 10 shrunk at respective places, a pair of side structures 20, 20 could be welded at predetermined intervals with ease.

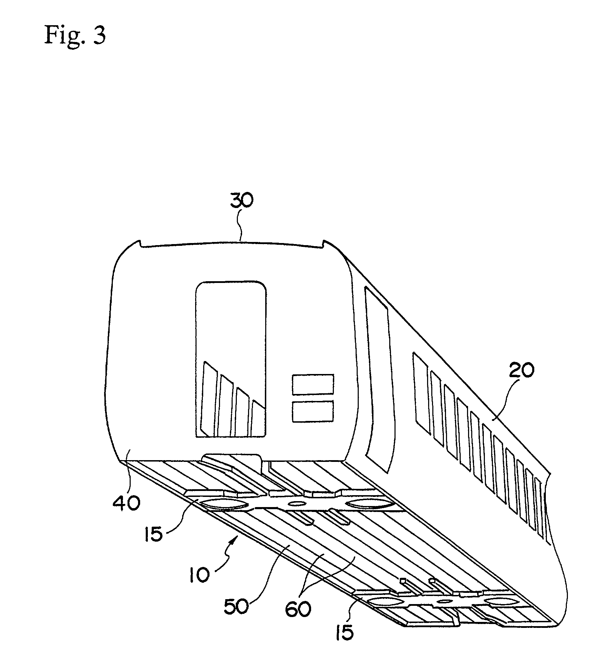

Upon welding the side structures 20, 20 to the underframe 10, a jig 201 with predetermined size is arranged between a pair of side structures 20, 20, and jigs 202, 202 from exterior interposes the same therebetween, as is shown in FIG. 3. By doing so, the position, the interval of the side structures 20, 20 are determined, so that the same could be performed with false welding, then with proper welding. The reference number 205 denotes a bed for placing the car body.

The projecting segment 73 may overlap the plate constituting the lower hollow-shaped material of the side sill 95. That is, the projecting segment 101 may overlap the face plate 71. Also, the projecting segment 103 may overlap the lower surface of the projecting segment 73.

In the above-mentioned embodiment, the side sill is indicated for each of the underframe 10 and the side structure 20. However, it may be formed in one body as a substantial strength member. In appearance, the large members positioned below the upper surface of the underframe 10 are side sills.

According to the present invention, the width size of the car body could be obtained regardless of the accuracy of the width size of the underframe, the operation could be carried out with ease, and the cost could be lowered. Also, the bonding of the underframe and the side structures are performed from above and below, so that it makes it difficult to see the bonding region at the exterior of the car body from the side direction of the side structures. This results in simplified bonding operation, and cut in cost.

## Claims

1. A car body of a railway car, wherein:
an upper and lower portions of a first side sill at an end portion in the width direction of an underframe and an upper and lower portions of a second side sill at an lower end portion of aside structure are respectively overlapped in the horizontal direction;
said overlap between said upper portion of said first side sill and said upper portion of said second side sill is bonded from above; and
said overlap between said lower portion of said first side sill and said lower portion of said second side sill is bonded from below.

2. A car body of a railway car according to claim 1, wherein at least one member constituting said overlap in said two overlaps is a projecting segment projecting in the horizontal direction, and said projecting segment is formed by elongating a plate constituting a hollow-shaped material of said first side sill or said second side sill.

3. A car body of a railway car according to claim 1, wherein:
said first side sill and said second side sill are respectively formed from hollow-shaped materials;
each member constituting said overlap at said lower portion is a projecting segment projecting in the horizontal direction; and
said projecting segments are formed by projecting a lower plate of said hollow-shaped material of said first side sill and a lower plate of said hollow-shaped material of said second side sill in the horizontal direction.

4. A car body of a railway car according to claim 1, wherein at least one member constituting said overlap in said two overlaps is a face plate of a hollow-shaped material which is positioned along the horizontal direction.

5. A car body of a railway car according to claim 1, wherein:
said overlap of said upper portion is comprised of an upper face plate of a hollow-shaped material of said first side sill, and a projecting segment formed by elongating a plate connecting two face plates of a hollow-shaped material of said second side sill in the horizontal direction; and
said projecting segment is positioned above said face plate.

6. A car body of a railway car according to claim 1, wherein a projecting segment projecting downward from said second side sill is positioned to the external side in the width direction of a car body than a welding region of said lower overlap.
